# EUROPEAN PATENT APPLICATION

(11) **EP 0 881 788 A2**
(43) Date of publication of application: **02.12.1998**
(21) Application number: 98109567.2
(22) Date of filing: 26.05.1998
(51) Int. Cl.: H04B 10/158

(54) **Optical receiver and related optical wireless transmission system**

(30) Priority: 30.05.1997 JP 158048/97
(71) Applicant: VICTOR COMPANY OF JAPAN, LIMITED, Yokohama-shi, Kanagawa 221-0022 (JP)
(72) Inventor: Hirohashi, Kazutoshi, Kanazawa-ku, Yokohama (JP); Sasao, Takayoshi, Zushi-shi, Kanagawa-ken (JP); Kubota, Junichi, Sagamihara-shi, Kanagawa-ken (JP)
(74) Representative: Pellmann, Hans-Bernd, Dipl.-Ing.

(57) **Abstract**

A light receiving element (13) receives a light signal (9). A light-permeable diffusive film (50) is disposed in front of the light receiving element (13). The light-permeable diffusive film (50) passes the light signal (9) at a predetermined transmission rate and diffuse the same. The light receiving element (13) and the light-permeable diffusive film (50) cooperatively constitute an optical receiver (61).

## Description

### BACKGROUND OF THE INVENTION

The present invention relates to an optical receiver for receiving a light signal and an optical wireless transmission system incorporating this optical receiver.

In general, a remote control apparatus or an optical wireless transmission system relies on a light signal which is sent as an intensity modified transmission signal. An LED (light emitting diode) or an LD (laser diode) is used as a light emitting element for emitting this kind of light signal. The LED or LD is generally integrated with a collimator lens to have a predetermined directivity. For example, in a general remote control apparatus, the directivity is set to approximately ± 15°. When an optical transmission is used for the long-range wireless transmission, it is effective to emit the light with a narrowed directivity.

### SUMMARY OF THE INVENTION

An object of the present invention is to provide an optical receiver capable of realizing a stable long-range optical transmission using a thin beamed light signal.

Another object of the present invention is to provide an optical wireless transmission system using such an optical receiver.

In order to accomplish the above and other related objects, the present invention provides an optical receiver comprising a light receiving element for receiving a light signal and a light-permeable diffusive film (i.e., a penetration diffuse film) provided in front of the light receiving element for passing the light signal at a predetermined transmission rate and diffusing the same.

With this arrangement, part of the light signal penetrates the light-permeable diffusive film and, as diffused rays of light, reaches the light receiving element. Accordingly, even if the optical axis is slightly deviated from a target (i.e., the light receiving element) when the light signal is transmitted, such a deviation can be compensated by the diffused rays of light surely entering the light receiving element. This assures a sufficient signal receiving level.

Furthermore, an optical wireless transmission system may be constituted by a light transmitting device emitting the light signal and a light receiving device having the above-described light receiving element. A laser beam can be used as the light signal. The laser beam is roughly directed toward the light-permeable diffusive film which has a relatively large target area. Thus, the communications path can be securely maintained even when the optical axis is slightly deviated from the target light receiving element. This stabilizes the long-range optical transmission.

### BRIEF DESCRIPTION OF THE DRAWINGS

The above and other objects, features and advantages of the present invention will become more apparent from the following detailed description which is to be read in conjunction with the attached drawings, in which:
Fig. 1 is a schematic view showing an arrangement of a related optical receiver and an optical wireless transmission system in accordance with a first embodiment of the present invention;
Fig. 2 is a plan view showing a light-permeable diffusive film used in the optical receiver shown in Fig. 1;
Fig. 3 is a schematic view showing an arrangement of an optical wireless transmission system in accordance with a second embodiment of the present invention;
Fig. 4 is a schematic view showing a detailed arrangement of a light transmitting and receiving device in accordance with the second embodiment of the present invention;
Fig. 5 is a plan view showing a collective and distributive optical transceiver in accordance with the second embodiment of the present invention;
Fig. 6 is a cross-sectional view showing the collective and distributive optical transceiver in accordance with the second embodiment of the present invention shown in Fig. 5;
Fig. 7 is a schematic view showing a basic arrangement of an optical wireless transmission system;
Fig. 8 is a schematic view showing a basic arrangement of another optical wireless transmission system;
Fig. 9 is a block diagram showing a detailed arrangement of a light transmitting and receiving device shown in Fig. 8;
Fig. 10 is a plan view showing the collective and distributive optical transceiver shown in Fig. 8;
Fig. 11 is a graph showing a relationship in frequency between a light signal and a pilot ray of light; and
Fig. 12 is a block diagram showing a detailed arrangement of the collective and distributive optical transceiver shown in Fig. 8.

### DESCRIPTION OF THE PREFERRED EMBODIMENTS

Hereinafter, preferred embodiments of the present invention will be explained with reference to the attached drawings. Identical parts are denoted by the same reference numerals throughout the views.

### Basic Arrangement of Optical Wireless Transmission System

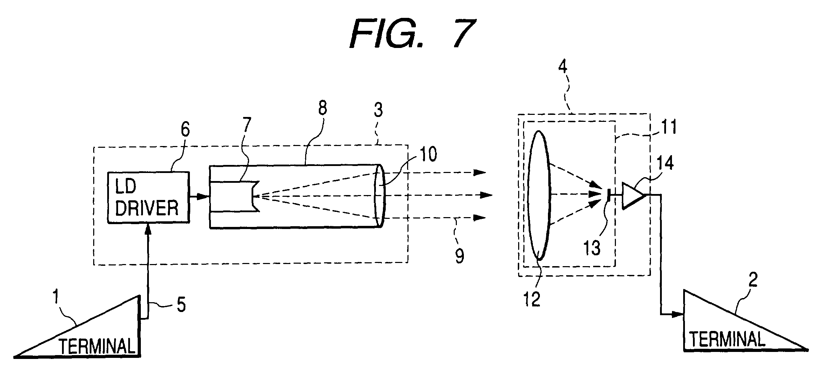

Before explaining the characteristic features of the present invention, basic arrangements of the present invention will be explained with reference to related optical wireless transmission systems. The optical wireless transmission system is used for performing a long-range data transmission. Fig. 7 is a schematic block diagram showing an optical wireless transmission system.

It is assumed that data transmission is performed between two terminals 1 and 2, such as computers, via a light transmitting device 3 and a light receiving device 4. A digital signal 5, generated from one terminal 1, is entered into an LD driver 6. The LD driver 6 functions as a means for on and off controlling the current supplied to a light emitting element 7 in accordance with the digital signal 5. The light transmitting device 3 generates an infrared ray whose light intensity (or optical amplitude) is modified as a light signal 9. The light transmitting device 3 has an optical transmitter 8 incorporating a light emitting element 7, such as a laser diode, and a collimator lens 10. With this arrangement, an extremely thin beam is emitted from the light transmitting device 3 as the light signal 9.

On the other hand, the light receiving device 4 comprises an optical receiver 11. The optical receiver 11 comprises a condensing means 12 having a large aperture, such as a parabolic reflector or a converging lens, and a light receiving element 13, such as a photo diode, disposed at a focal point of the condensing means 12. Fig. 7 shows a converging lens as the condensing means 12. The reason why such a large-aperture optical means, i.e., a parabolic reflector or a converging lens, is used is that it becomes easy for the light transmitting device 3 to adjust an optical axis of the light signal 9 when a target has a large area. The light signal 9, received by the optical receiver 11, is entered into a light receiving circuit 14. The light receiving circuit 14 converts the light signal 9 into an electric signal and reproduced as a digital signal. The reproduced digital signal is sent to the other terminal 2. In this manner, an optical wireless data transmission from the terminal 1 to the terminal 2 is accomplished.

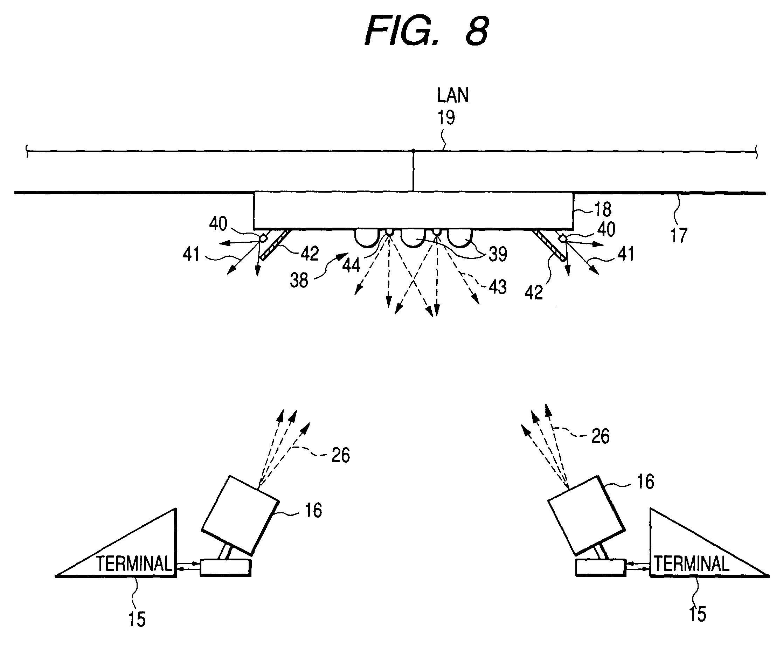

Next, another optical wireless transmission system will be explained. Fig. 8 shows an optical wireless LAN (Local Area Network) system which is one of optical wireless transmission systems. This system comprises a plurality of terminals 15, such as personal computers, each being equipped with a light transmitting and receiving device 16. A collective and distributive optical transceiver 18 is disposed at a central region on a ceiling 17 of a room accommodating the terminals 15. The collective and distributive optical transceiver 18 is connected to a LAN 19 by cable, thereby connecting each terminal 15 to the LAN 19.

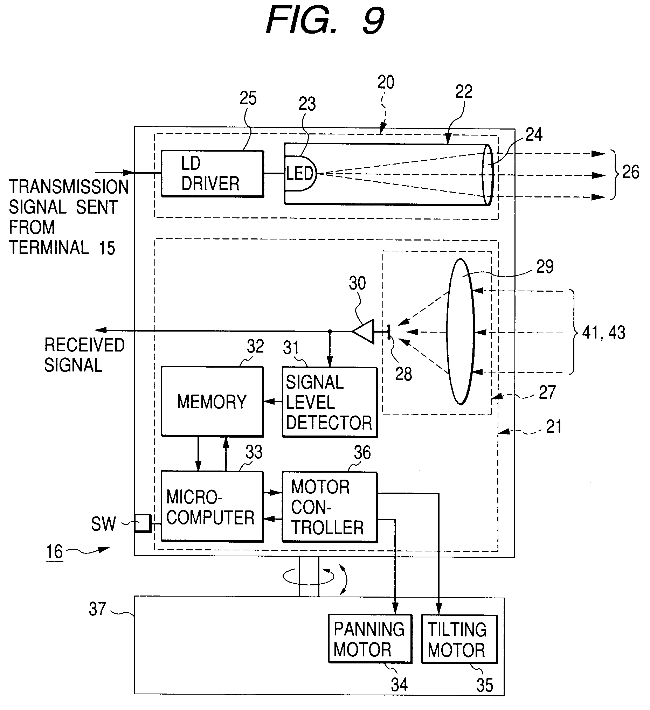

For simplification, Fig. 8 shows only two terminals 15 respectively associated with dedicated light transmitting and receiving devices 16. Fig. 9 shows a detailed arrangement of each light transmitting and receiving device 16. The light transmitting and receiving device 16 comprises a light transmitting device 20 and a light receiving device 21. The light transmitting device 20 comprises an optical transmitter 22 which integrates a light emitting element 23, each being an LED, and a collimator lens 24. The light transmitting device 20 further comprises an LED driver 25 which receives a transmission signal from an associated terminal 15. The LED driver 25 functions as a means for on and off controlling the current supplied to the light emitting element 23 in accordance with the transmission signal sent from the associated terminal 15. Thus, an intensity modified light signal 26 is generated from the light transmitting device 20.

The light receiving device 21 comprises an optical receiver 27 which is substantially a combination of a photo diode 28 and a large-aperture converging lens 29. For receiving the light signal, the optical receiver 27 is directed toward the collective and distributive optical transceiver 18 as shown in Fig. 8. The received light signal is converted into an electric signal in a light receiving circuit 30 and output as a received signal.

Furthermore, the light receiving device 21 comprises a signal level detector 31 for detecting an intensity of the received light signal, a memory 32 for storing an output value of the signal level detector 31 together with directional data, a microcomputer 33 for performing predetermined computations in accordance with the data stored in the memory 32 to obtain an optimum receiving direction for maximizing the signal receiving level, and a motor controller 36 for controlling a panning motor 34 and a tilting motor 35.

The light transmitting device 20 and the light receiving device 21 are integrated as a single unit which is connected to a base 37 via a panning drive mechanism (not shown) and a tilting drive mechanism (not shown). The panning drive mechanism rotates the light transmitting and receiving device 16 along a horizontal plane about a vertical axis, while the tilting drive mechanism rotates the light transmitting and receiving device 16 along a vertical plane about a horizontal axis. In Fig. 9, SW represents a switch for instructing an initiation of search.

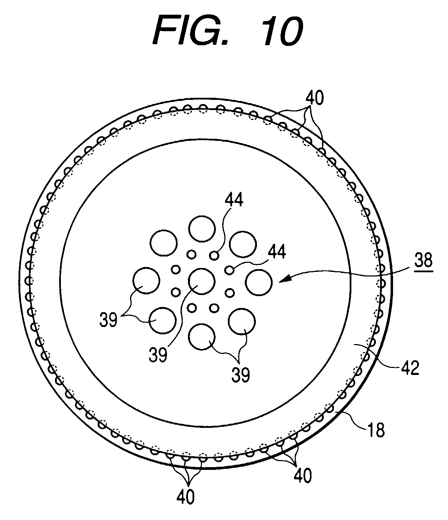

Fig. 10 is a plan view showing the collective and distributive optical transceiver 18 which has an optical receiver 38. The optical receiver 38 comprises a plurality of light receiving elements 39, each being a photo diode. One light receiving element 39 is positioned at a center and other light receiving elements 39 are arranged along a ring surrounding the central light receiving element 39, as shown in Fig 10. Furthermore, a plurality of light emitting elements 40, each being an LED, are disposed along an outermost ring surrounding the light receiving elements 39 disposed along the inner ring. Each light emitting element 40 emits a light signal 41 for transmitting data.

Furthermore, a ring separator 42 is provided adjacent to and at an inner side of the light emitting elements 40 disposed along the outermost ring. The separator 42 functions as a partition shade for preventing the light signal 41 from entering into the light receiving element 39.

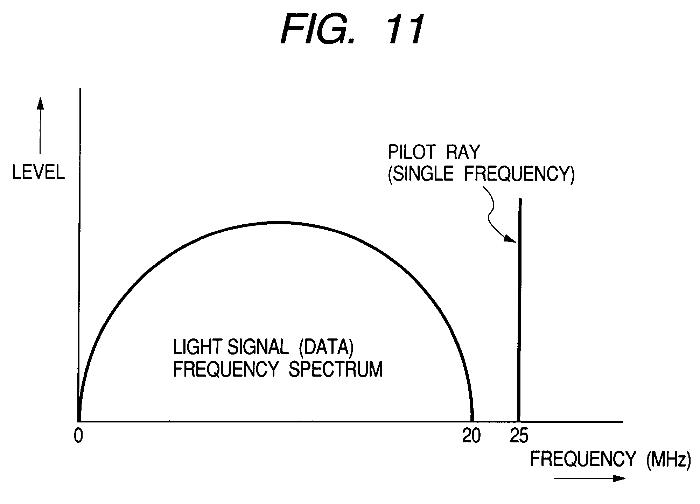

A plurality of pilot LED elements 44 are disposed in a region where the group of the light receiving elements 39 are located. Each pilot LED element 44 emits a pilot ray 43 whose frequency is different from the frequency of the data transmitting light signal. Fig. 11 shows a relationship in frequency between the pilot ray 43 and the data transmitting light signal 41. The pilot ray has a single frequency fixed to a predetermined value deviated from the frequency spectrum of the light signal. The sign form of the data transmitting light signal is a Manchester's sign. A bit rate is 10 Mbps.

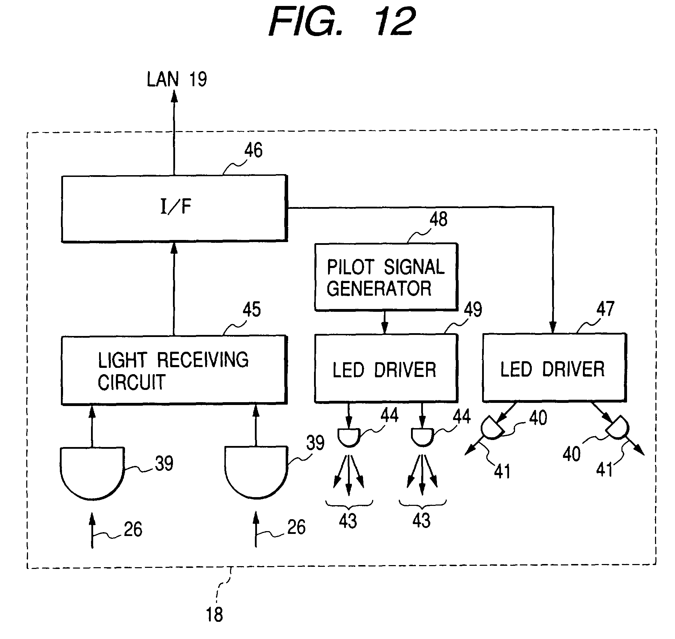

Fig. 12 is a block diagram showing an arrangement of the collective and distributive optical transceiver 18. Each light receiving element 39 is connected to an interface 46 via a light receiving circuit 45. The interface 46 serves as a relay means for transmitting the received light signal from the light receiving circuit 45 to the LAN 9. Each light emitting element 40 is connected to an LED driver 47 whose operation is controlled by a signal sent from the interface 46. Each light emitting element 40 is on-and-off controlled by the LED driver 47. Furthermore, each pilot LED element 44 is connected to an LED driver 49 whose operation is controlled by a signal sent from a pilot signal generator 48. The pilot LED element 44 always generates the pilot ray 43.

In the above-described apparatus, a communications path is established in the following manner. First of all, the search switch SW shown in Fig. 9 is turned on. In response to a turned-on signal of the search switch SW, both the panning drive mechanism and the tilting drive mechanism are activated to perform a search along a semispherical range. As shown in Fig. 8, the collective and distributive optical transceiver 18 has the pilot LED elements 44 provided in the vicinity of the light receiving elements 39. Each pilot LED element 44 always emits the pilot ray 43 whose frequency is deviated from the frequency band of the data transmitting light signal 41. The light transmitting and receiving device 16 produces a light quantity map of the received pilot ray 43 in relation to the direction of the search motion. The obtained map is stored in the memory 32 (refer to Fig. 9). The microcomputer 33 identifies an optimum direction for maximizing the signal receiving level based on the map data stored in the memory 32. The motor controller 36 controls both the panning motor 34 and the tilting motor 35 in accordance with the optimized direction. Thus, the optical axis is automatically adjusted to the optimized direction so as to maximize the signal receiving level. The optimized direction for maximizing the signal receiving level is identical with an incident direction of the transmitted light signal with respect to the light receiving section of the collective and distributive optical transceiver 18. Thus, the establishment of the transmission path is completed.

The apparatus shown in Fig. 7 performs the long-range optical transmission by transmitting the light signal 9 as a beam and receiving the transmitted light signal 9 by the condensing means 12, such as the parabolic reflector or the converging lens. In this manner, the narrowed directivity in the signal transmission can be easily realized by using the light emitting element 7 and the collimator lens 10.

However, the accuracy of an optical device used in the light receiving device 4 must be high to assure a satisfactory signal receiving level. Similarly, the accuracy in directing the light receiving device 4 toward the light transmitting device 3 must be high. Therefore, there is a problem that the communications may be failed by inaccurate setting of the optical axis due to vibrations or the like.

According to the apparatus shown in Figs. 8 to 12, the light signal 26 needs to directly enter into the light receiving element 39 of the collective and distributive optical transceiver 18 for successful communications. When the directivity of the light signal 26 is narrow, the search must be performed extremely accurately. And, this apparatus is disadvantageous in that the transmission path is so delicate that the spot may be dislocated by a tiny vibration. Accordingly, it is general that the directivity of the light signal is widened to a certain degree so that the light surely hits the light receiving element 39 even when the optical axis is slightly dislocated. However, widening the directivity is disadvantageous in that the light level is so reduced that the long-range optical transmission cannot be performed stably.

In view of the above-described problems, to solve them effectively, the present invention provides an optical receiver capable of performing a long-range optical transmission stably by using a narrow beam light signal. Furthermore, the present invention provides an optical wireless transmission system using such an optical receiver.

### Characteristic Features of The Present Invention

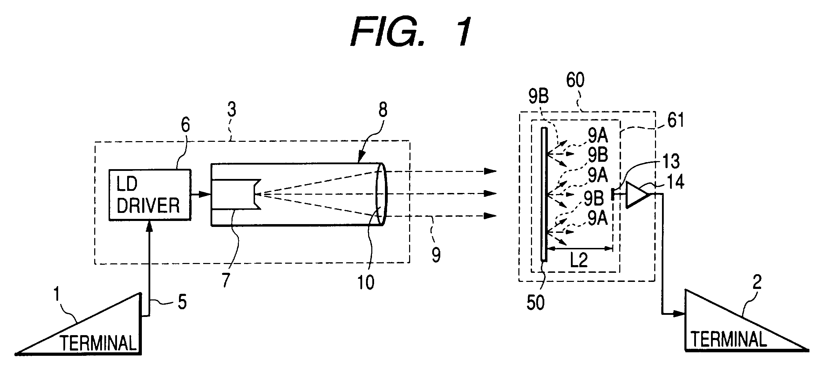

Hereinafter, preferred embodiments of optical receivers and related optical wireless transmission systems will be explained with reference to Figs. 1 through 6.

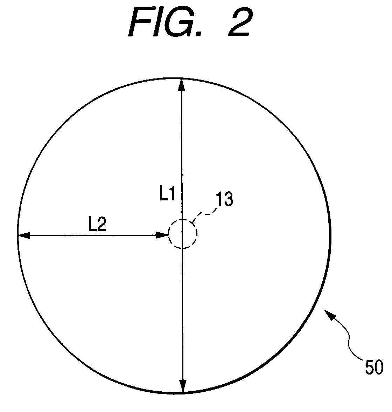

Fig. 1 is a schematic diagram showing an optical receiver and an optical wireless transmission system in accordance with a first embodiment of the present invention. Fig. 2 is a plan view showing a light-permeable diffusive film used in the optical receiver shown in Fig. 1. The same components disclosed in Fig. 7 are denoted by identical reference numerals. The present invention system shown in Fig. 1 differs from the system shown in Fig. 7 in that the large-aperture converging lens 12 is replaced by a light-permeable diffusive film 50.

It is assumed that data transmission is performed between two terminals 1 and 2, such as computers, via a light transmitting device 3 and a light receiving device 60. These two devices 3 and 60 cooperatively constitute an optical wireless transmission system. The light transmitting device 3 has an optical transmitter 8 incorporating a light emitting element 7, being a laser diode, and a collimator lens 10. The light emitting element 7 emits a laser beam. The collimator lens 10 receives the laser beam and produces parallel rays of light. Thus, the light transmitting device 3 emits an extremely thin beam as the light signal 9. The light emitting element 7 is controlled by an LD driver 6. A digital signal 5, supplied from one terminal 1, is entered into the LD driver 6. The LD driver 6 performs an on-and-off control of the current supplied to the light emitting element 7 in accordance with the supplied digital signal 5. The light emitting element 7 generates an infrared laser beam whose light intensity (or optical amplitude) is modified in accordance with the light signal 5.

On the other hand, the light receiving device 60 comprises an optical receiver 61 embodying the present invention. The light receiving device 60 further comprises a light receiving circuit 14 which converts the light signal 9 received by the optical receiver 61 into an electric signal. The optical receiver 61 comprises a light receiving element 13 which is a photo diode. A light-permeable diffusive film (i.e., a penetration diffuse film) 50 is disposed in front of the light receiving element 13 as a characteristic feature of the present invention. The light signal 9 penetrates the light-permeable diffusive film 50 and, after passing through this film 50, advances as diffused rays of light. The light-permeable diffusive film 50 is configured into a circular disk with a center corresponding to the light receiving element 13 as shown in Fig. 2. The light-permeable diffusive film 50 has a diameter L1. A distance between the light receiving element 13 and the outermost edge of the light-permeable diffusive film 50 is defined by L2. The diameter L1 and the distance L2 are determined according to predetermined design factors such as an optical transmission path. For example, L1 is 200 mm and L2 is 100 mm. Anyway, the diameter L1 of the light-permeable diffusive film 50 can be enlarged in this manner. This provides a relatively large target area for the incoming light signal 9, facilitating the adjustment of the optical axis for receiving the light signal. It is preferable that the light-permeable diffusive film 50 has a permeability of approximately 50% for the light signal 9 of an infrared ray. For example, a micro-lens bonding acrylic sheet is used as a practical material for the light-permeable diffusive film 50.

In the above-described system, the light transmitting device 3 operates in the following manner. In response to the digital signal 5 supplied from the terminal 1, the LD driver 6 on-and-off controls the light emitting element 7 so as to emit an intensity-modified laser beam. The emitted laser beam enters into the collimator lens 10 which produces parallel rays of light as a thin beamed light signal 9.

The light signal 9 reaches the light-permeable diffusive film 50 of the light receiving device 60. Part of the entered light penetrates the light-permeable diffusive film 50 and advances as diffused rays 9B. Some of diffused rays 9B reach the light receiving element 13 disposed behind the light-permeable diffusive film 50. The light signal received by the light receiving element 13 is converted into an electric signal at the light receiving circuit 14. The obtained electric signal is sent to the other terminal 2. In this manner, a data transmission from the terminal 1 to the terminal 2 is accomplished.

In this data transmission, the beamed light signal 9 emitted from the light transmitting device 3 hits the light-permeable diffusive film 50. Part of the light signal 9 is converted into the diffused rays 9B which enter the light receiving element 13, thereby accomplishing the signal reception. Accordingly, when seen from the light receiving element 13, a laser spot of the light signal 9 formed on the light-permeable diffusive film 50 looks like a virtual diffusive light source. Hence, when the light-permeable diffusive film 50 has a permeability of approximately 50%, an overall light energy of the virtual diffusive light source is equivalent to 50% of the transmitted power when the laser beam of the light emitting element 7 is sufficiently thin. This assures a sufficient signal receiving level. Namely, according to this system, the only required thing is to direct the beamed light signal 9 somewhere on the light-permeable diffusive film 50 of the light receiving device 60. When the beamed light signal 9 hits the light-permeable diffusive film 50, the beam spot can serve as the virtual diffusive light source which emits transmitted rays 9A and diffused rays 9B. Some of the transmitted rays 9A and the diffused rays 9B are surely received by the light-receiving element 13. This is advantageous in that no accurate adjustment is required for the optical axis when the light signal is received. The optical system can be simplified and easily realized.

Furthermore, the communications path can be maintained safely even when the system is subjected to vibrations to a certain extent. This makes it possible to realize a stable long-range optical transmission.

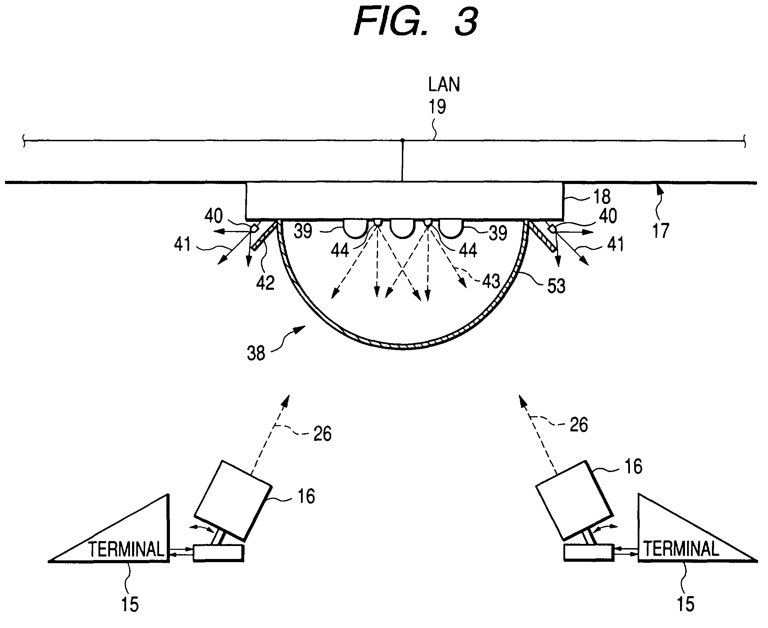

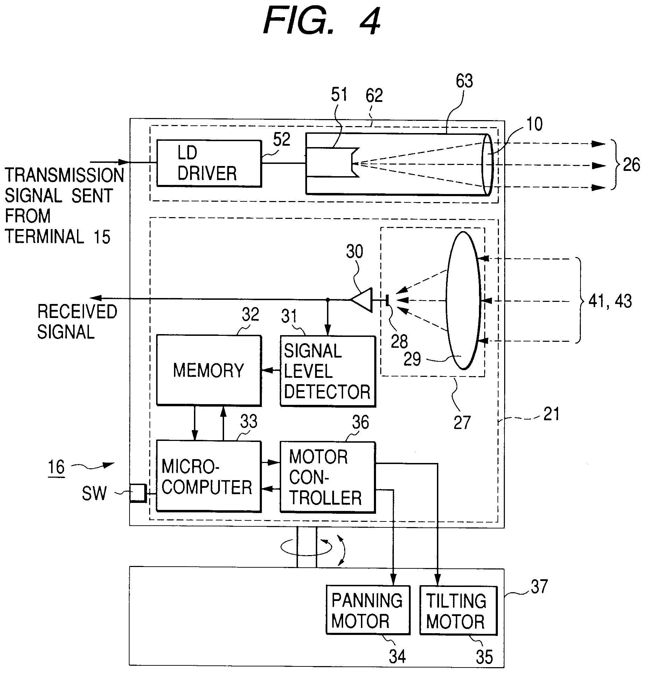

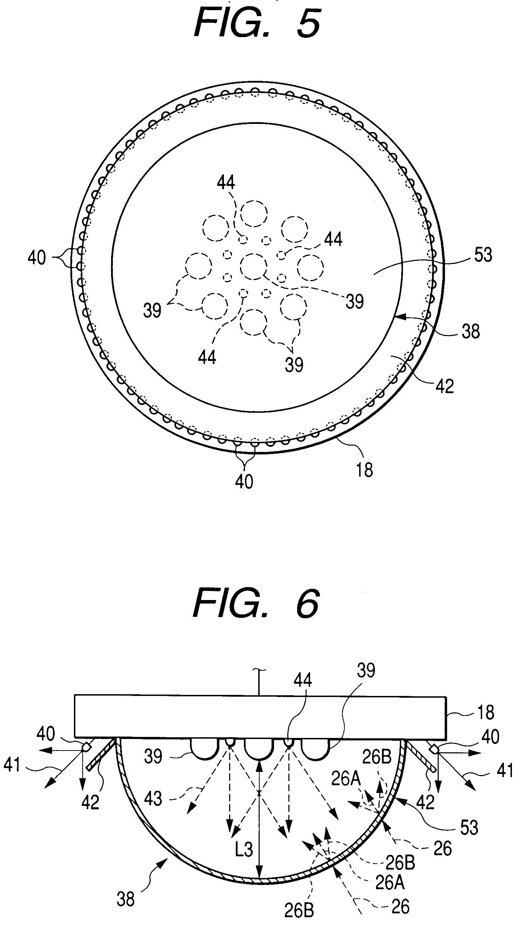

Next, an optical receiver and an optical wireless transmission system in accordance with a second embodiment will be explained. Fig. 3 is a schematic view showing an optical wireless transmission system in accordance with the second embodiment of the present invention. Fig. 4 is a view showing a detailed arrangement of a light transmitting and receiving device. Fig. 5 is a plan view showing a collective and distributive optical transceiver. Fig. 6 is a cross-sectional view showing the collective and distributive optical transceiver shown in Fig. 5. The same components disclosed in Figs. 8 to 11 are denoted by identical reference numerals.

The system shown in Figs. 3 through 6 differs from the system shown in Figs. 8 to 11 in that the LED used as the light emitting element 23 of the light transmitting device 20 is replaced by an LD which emits a laser beam and in that a dome of a light-permeable diffusive film is disposed in front of the light receiving elements 39 shown in Fig. 10.

As shown in Fig. 3, this system comprises a plurality of terminals 15, such as personal computers, each being equipped with a light transmitting and receiving device 16. A collective and distributive optical transceiver 18 is disposed at a central region on a ceiling 17 of a room accommodating the terminals 15. The collective and distributive optical transceiver 18 is connected to a LAN 19 by cable, thereby connecting each terminal 15 to the LAN 19. Although only two terminals 15 equipped with the light transmitting and receiving devices 16 are shown in Fig. 3, it is needless to say the number of terminals 15 and associated light transmitting and receiving devices 16 possibly varies depending on the system design of the LAN.

The light transmitting and receiving device 16, as shown in Fig. 4, comprises a light transmitting device 62 and a light receiving device 21. The light transmitting device 62 comprises an optical transmitter 63 which integrally incorporates a light emitting element 51, being an LD generating a laser beam, and a collimator lens 10.

A laser beam is generally excellent in its directivity. Using the light emitting element 51 generating a laser beam is therefore preferable to ensure the light signal to reach a later-described light-permeable diffusive film. The light transmitting device 62 acts as one of essential features constituting the present invention system. The light transmitting device 62 further comprises an LD driver 52 which receives a transmission signal from an associated terminal 15. The LD driver 52 on-and-off controls the current supplied to the light emitting element 51 in accordance with the transmission signal sent from the associated terminal 15. Thus, an intensity modified light signal 26 is generated from the light transmitting device 62.

The light receiving device 21 comprises an optical receiver 27 which is substantially a combination of a photo diode 28 and a large-aperture converging lens 29. For receiving the light signal, the optical receiver 27 is directed toward the collective and distributive optical transceiver 18 as shown in Fig. 3. The received light signal is converted into an electric signal in a light receiving circuit 30 and output as a received signal.

Furthermore, the light receiving device 21 comprises a signal level detector 31 for detecting an intensity of the received light signal, a memory 32 for storing an output value of the signal level detector 31 together with directional data, a microcomputer 33 for performing predetermined computations in accordance with the data stored in the memory 32 to obtain an optimum receiving direction for maximizing the signal receiving level, and a motor controller 36 for controlling a panning motor 34 and a tilting motor 35.

The light transmitting device 62 and the light receiving device 21 are integrated as a single unit which is connected to a base 37 via a panning drive mechanism (not shown) and a tilting drive mechanism (not shown). The panning drive mechanism rotates the light transmitting and receiving device 16 along a horizontal plane about a vertical axis, while the tilting drive mechanism rotates the light transmitting and receiving device 16 along a vertical plane about a horizontal axis. In Fig. 4, SW represents a switch for instructing an initiation of search.

Figs. 5 and 6 show an optical receiver 38 of the collective and distributive optical transceiver 18 in accordance with the second embodiment of the present invention. The optical receiver 38 comprises a plurality of light receiving elements 39, each being a photo diode. One light receiving element 39 is positioned at a center and other light receiving elements 39 are arranged along a ring surrounding the central light receiving element 39, as shown in Fig. 5. A semi-spherical dome of a light-permeable diffusive film 53, serving as one of essential features of the present invention, is provided at a front side of the light receiving elements 39 so as to cover all of these light receiving elements 39 with its semi-spherical body.

The light-permeable diffusive film 53 is functionally identical with the light-permeable diffusive film 50 shown in the first embodiment. The light signal 26 penetrates the light-permeable diffusive film 53 and advances as diffused rays of light. The light-permeable diffusive film 53 is spaced from the central light receiving element 39 by a distance L3. The distance L3 is, for example, set to 100 mm which is identical with the distance L2 shown in the first embodiment.

Accordingly, the dome of the light-permeable diffusive film 53 has a diameter of approximately 200 mm. This provides a relatively large target area for the incoming light signal 26.

Furthermore, a plurality of light emitting elements 40, each being an LED, are disposed along an outermost ring surrounding the light receiving elements 39 disposed along the inner ring. Each light emitting element 40 emits a light signal 41 for transmitting data.

Furthermore, a ring separator 42 is provided adjacent to and inside the light emitting elements 40 disposed along the outermost ring. The separator 42 functions as a partition shade for preventing the light signal 41 from entering into the light receiving element 39.

A plurality of pilot LED elements 44 are disposed in a region where the group of the light receiving elements 39 are located. Each pilot LED element 44 emits a pilot ray 43 whose frequency is different from the frequency of the data transmitting light signal. As explained previously, Fig. 11 shows a relationship in frequency between the pilot ray 43 and the data transmitting light signal 41. The pilot ray has a single frequency fixed to a predetermined value deviated from the frequency spectrum of the light signal. The sign form of the data transmitting light signal is a Manchester's sign. A bit rate is 10 Mbps.

The internal arrangement of the collective and distributive optical transceiver 18 is substantially identical with that shown in Fig. 12. Thus, no explanation will be given here.

In the above-described apparatus, a communications path is established in the following manner.

First of all, the search switch SW shown in Fig. 4 is turned on. In response to a turned-on signal of the search switch SW, both the panning drive mechanism and the tilting drive mechanism are activated to perform a search along a semispherical range. As shown in Figs. 3 and 6, the collective and distributive optical transceiver 18 has the pilot LED elements 44 provided in the vicinity of the light receiving elements 39. Each pilot LED element 44 always emits the pilot ray 43 whose frequency is deviated from the frequency band of the data transmitting light signal 41. The light transmitting and receiving device 16 produces a light quantity map of the received pilot ray 43 in relation to the direction of the search motion. The obtained map is stored in the memory 32 (refer to Fig. 4). The microcomputer 33 identifies an optimum direction for maximizing the signal receiving level based on the map data stored in the memory 32. The motor controller 36 controls both the panning motor 34 and the tilting motor 35 in accordance with the optimized direction. Thus, the optical axis is automatically adjusted to the optimized direction so as to maximize the signal receiving level. The optimized direction for maximizing the signal receiving level is identical with an incident direction of the transmitted light signal with respect to the light receiving section of the collective and distributive optical transceiver 18. Thus, the establishment of the transmission path is completed

After establishing the transmission path, the data transmission is performed next. In Fig. 4, the digital transmission signal sent from the terminal 15 enters into the LD driver 52. The current supplied to the light emitting element 51 is on-and-off controlled in accordance with the transmission signal. The light emitting element 51 generates an intensity modified laser beam. This laser beam enters into the collimator lens 10 which produces parallel rays of light as a beamed light signal 26.

The light signal 26 reaches the light-permeable diffusive film 53 of the optical receiver 38, as shown in Figs. 3 and 6. Part of the entered light penetrates the light-permeable diffusive film 53 and advances as diffused rays 26B. Some of diffused rays 26B reach the light receiving elements 39 disposed behind the light-permeable diffusive film 53. The light signal received by the light receiving elements 39 is converted into an electric signal at the light receiving circuit 45 (refer to Fig. 12) and sent via the interface 46 to the LAN 19.

In this data transmission, in the same manner as in the first embodiment, a laser spot of the beamed light signal 26 is formed on the light-permeable diffusive film 53. Accordingly, when seen from the light receiving element 39, the beam spot of the light signal 26 looks like a virtual diffusive light source. Hence, the only required thing is to direct the beamed light signal 26 somewhere on the light-permeable diffusive film 53. When the beamed light signal 26 hits the light-permeable diffusive film 53, the beam spot can serve as the virtual diffusive light source which emits transmitted rays 26A and diffused rays 26B. Some of the transmitted rays 26A and the diffused rays 26B are received by the light-receiving elements 39. This is advantageous in that no accurate adjustment is required for the optical axis when the light signal is received.

Accordingly, the communications path can be maintained safely even when the system is subjected to vibrations to a certain extent. This makes it possible to realize a stable long-range optical transmission. The collective and distributive optical transceiver 18 performs the data transmission in the following manner. The light emitting elements 40 disposed in the peripheral portion send out the light signals 41. The light signal 41 is received by the light receiving device 21 of the light transmitting and receiving device 16 shown in Fig. 4.

Although the collective and distributive optical transceiver 18 shown in Fig. 3 comprises a plurality of light receiving elements 39, it is needless to say that the number of the light receiving elements 39 can be reduced to 1.

Furthermore, application of the present invention is not limited to the disclosed optical wireless transmission system. The present invention can be applied to any other systems performing the data transmission using a laser beam.

As explained in the foregoing description, the optical receiver and the optical wireless transmission system in accordance with the present invention can bring the following excellent functions and effects.

According to the present invention, a light-permeable diffusive film having a relatively large area is disposed in front of the light receiving element. This is advantageous in that, even when the incident direction of the light signal is deviated from the light receiving element, some of the diffusing rays can surly reach the light receiving element.

Accordingly, by using the thus arranged optical receiver in an optical wireless transmission system, a target area for the light signal can be enlarged. This makes it possible to surely establish the light path even when the optical axis is not adjusted accurately. Hence, the communications can be maintained safely even when the system is subjected to vibrations to a certain extent. This makes it possible to realize a stable long-range optical transmission.

This invention may be embodied in several forms without departing from the spirit of essential characteristics thereof. The present embodiments as described are therefore intended to be only illustrative and not restrictive, since the scope of the invention is defined by the appended claims rather than by the description preceding them. All changes that fall within the metes and bounds of the claims, or equivalents of such metes and bounds, are therefore intended to be embraced by the claims.

A light receiving element (13) receives a light signal (9). A light-permeable diffusive film (50) is disposed in front of the light receiving element (13). The light-permeable diffusive film (50) passes the light signal (9) at a predetermined transmission rate and diffuse the same. The light receiving element (13) and the light-permeable diffusive film (50) cooperatively constitute an optical receiver (61).

## Claims

1. An optical receiver comprising:
a light receiving element (13; 39) for receiving a light signal (9; 26); and
a light-permeable diffusive film (50; 53) provided in front of said light receiving element for passing said light signal at a predetermined transmission rate and diffusing said light signal.

2. An optical wireless transmission system comprising:
a light transmitting device (3; 62) for emitting a light signal (9; 26); and
a light receiving device (60; 18) for receiving said light signal, wherein said light receiving device has an optical receiver (61; 38) comprising:
a light receiving element (13; 39) for receiving said light signal; and
a light-permeable diffusive film (50; 53) provided in front of said light receiving element for passing said light signal at a predetermined transmission rate and diffusing said light signal.

3. The optical wireless transmission system in accordance with claim 2, wherein said light signal is a laser beam.
